# EUROPEAN PATENT APPLICATION

(11) **EP 4 541 670 A1**
(43) Date of publication of application: **23.04.2025**
(21) Application number: 23822861.3
(22) Date of filing: 17.05.2023
(51) Int. Cl.: B60S 1/00

(54) **VEHICLE-MOUNTED DEVICE CONTROL METHOD AND APPARATUS, DEVICE, AND STORAGE MEDIUM**

(30) Priority: 17.06.2022 CN 202210692187
(71) Applicant: Ningbo Lotus Robotics Co., Ltd., Ningbo, Zhejiang 315335 (CN)
(72) Inventor: LI, Hongshuang, Wuhan, Hubei 430058 (CN); LIU, Shaoyan, Wuhan, Hubei 430058 (CN); LI, Bo, Wuhan, Hubei 430058 (CN); DAI, Yicheng, Wuhan, Hubei 430058 (CN)
(74) Representative: Barker Brettell LLP
(86) International application number: PCT/CN2023/094705
(87) International publication number: WO 2023/241291

(57) **Abstract**

The present invention discloses a vehicle-mounted device control method and apparatus, a device, and a storage medium. The method includes: obtaining first state information for determining whether to enter an ice-breaking mode in response to a preset instruction, where the first state information includes a self-test result of a target vehicle-mounted device, and the target vehicle-mounted device has a first state of being concealed in a vehicle body at a first position and a second state of being exposed outside the vehicle body at a second position; determining, according to the first state information, whether an entry condition for the ice-breaking mode is met; when the entry condition for the ice-breaking mode is met, controlling the target vehicle-mounted device to convert from the first state to the second state in a first preset driving mode; detecting, within a first preset time period, whether the target vehicle-mounted device reaches the second position; and if the second position is not reached, outputting first fault prompt information. The present invention facilitates the improvement of the stability and robustness of a driving assistance system based on a concealed vehicle-mounted device during use.

## Description

### TECHNICAL FIELD

The present invention relates to the technical filed of vehicle, in particular, to a vehicle-mounted device control method and apparatus, a device, and a storage medium.

### BACKGROUND

The use of vehicle-mounted lidar can improve the perception of the surrounding environment for an advanced intelligent driving assistance system. Lidar has a large size, a high cost, and a mirror thereof is fragile. Therefore, some manufacturers will use a concealing mechanism. In this way, a lidar will be concealed inside a vehicle body when it is turned off; and the lidar will deploy to reach a designated working location through a mechanical assembly when it is turned on.

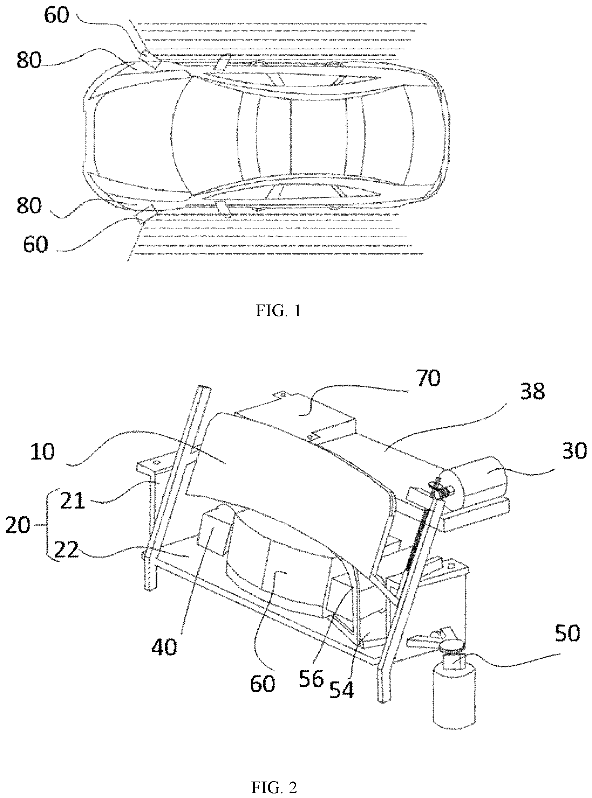

FIG. 1 is a schematic diagram of a position of a lidar concealing mechanism on a vehicle in the prior art. FIG. 2 is a schematic structural diagram of a lidar concealing mechanism in the prior art. Referring to FIG. 1 and FIG. 2, the lidar concealing mechanism includes a cover plate 10, a fixing bracket 20, a lifting structure 30, a cleaning structure 40, a pop-up structure 50, a lidar 60, and a controller 70. The cover plate 10 is located on a fender 80 of the vehicle body and a size thereof is matched with the size of an opening on the fender 80. The fixing bracket 20, the lifting structure 30, the cleaning structure 40, the pop-up structure 50, the lidar 60, and the controller 70 are all located inside the fender 80. The lifting structure 30 is located on the fixing bracket 20 and is connected to the cover plate 10, and can drive the cover plate 10 to move up and down under the control of the controller 70. The lidar 60 is disposed on the pop-up structure 50. The pop-up structure 50 is provided on the fixing bracket 20 and can move outward relative to the fixing bracket 20 under the control of the controller 70 to push the lidar 60 out of the interior of the fender 80. The cleaning structure 40 and the lidar 60 are disposed on the pop-up structure 50 together. The controller 70 is located above the lidar 60 and is connected to the automatic driving or advanced driving assistance domain controller through a first wire harness.

In cold areas, due to the condensation of water vapor is formed near the cover plate, the connection between the cover plate 10 and the fender of the vehicle body or the connection between the lidar 60 and the support apparatus 20 are prone to frost/icing. In severe cases, the moving mechanism of the cover plate may become stuck. When the lidar needs to be deployed to operate an advanced driving assistance function, the lidar cannot be deployed normally, which in turn renders the advanced driving assistance system ineffective. In severe cases, the motor 30/50 may be damaged after overload operation.

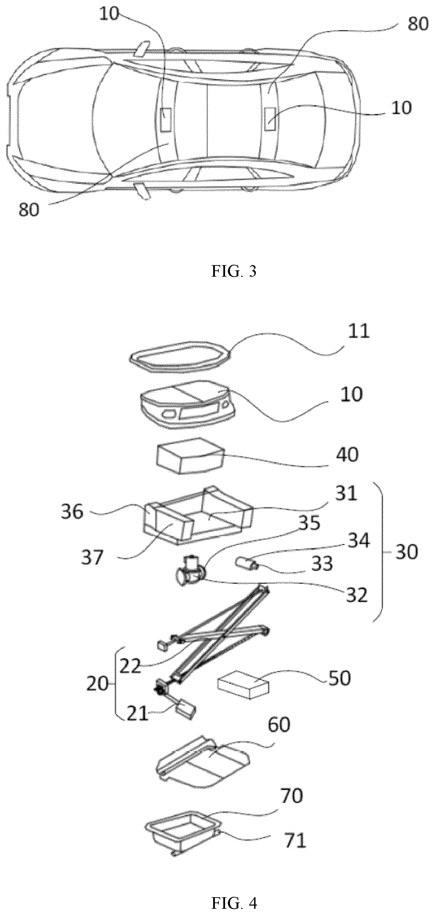

FIG. 3 is a schematic diagram of a position of another lidar concealing mechanism on a vehicle in the prior art. FIG. 4 is a schematic structural diagram of another lidar concealing mechanism in the prior art. Referring to FIG. 3 and FIG. 4, Lidar concealing mechanisms are located at two positions 10 at the front and rear of the vehicle roof. The lidar 40, the lifting apparatus 20, and the controller 50 are all located between the outer shell 10 and the lower cover plate 60. The lidar 40 is located above the lifting apparatus 20. The lifting apparatus 20 can be deployed or shortened under the control of the controller 50 to drive the lidar 40 to deploy outside the vehicle or retract inside the vehicle. The controller 50 is connected to the automatic driving domain controller or the advanced driving assistance domain controller through the first wire harness.

In cold areas, due to the condensation of water vapor is formed near the cover plate, the connection between the above-mentioned cover plate 11 and the vehicle roof is prone to frost/icing. In severe cases, the moving mechanism of the cover plate may become stuck. When the lidar needs to be deployed to operate an advanced driving assistance function, the lidar cannot be deployed normally, which in turn renders the advanced driving assistance system ineffective. In severe cases, the motor 21 may be damaged after overload operation.

Therefore, it is necessary to provide a solution to the phenomenon of freezing of the concealing mechanism caused by low temperature environment to ensure that the concealed-type lidar mechanism can meet the needs of the advanced driving assistance even at a low temperature.

### SUMMARY

The present invention aims to solve at least one of the technical problems existing in the prior art. To this end, a first aspect of the present invention proposes a vehicle-mounted device control method, including:
obtaining first state information for determining whether to enter an ice-breaking mode in response to a preset instruction; where the first state information includes a self-test result of a target vehicle-mounted device, and the target vehicle-mounted device has a first state of being concealed in a vehicle body at a first position and a second state of being exposed outside the vehicle body at a second position;
determining, according to the first state information, whether an entry condition for the ice-breaking mode is met;
when the entry condition for the ice-breaking mode is met, controlling the target vehicle-mounted device to convert from the first state to the second state in a first preset driving mode;
detecting, within a first preset time period, whether the target vehicle-mounted device reaches the second position; and
if the second position is not reached, outputting first fault prompt information.

Further, after the detecting, within the first preset time period, whether the target vehicle-mounted device reaches the second position, the method further includes:
if the second position is not reached, controlling the target vehicle-mounted device to convert from the first state to the second state in a second preset driving mode; where the second preset driving mode has greater driving force and/or driving frequency as compared to the first preset driving mode; and
detecting, within a second preset time period, whether the target vehicle-mounted device reaches the second position.

Further, the controlling the target vehicle-mounted device to convert from the first state to the second state in the first preset driving mode includes:
controlling an action of a motor of the target vehicle-mounted device with a first duty cycle parameter; wherein the motor is used to drive the target vehicle-mounted device to convert from the first state to the second state, and the first duty cycle parameter includes a first duty cycle and/or a first duty cycle change rate.

Further, the controlling the target vehicle-mounted device to convert from the first state to the second state in the second preset driving mode includes:
controlling an action of a motor of the target vehicle-mounted device with a second duty cycle parameter; where the motor is used to drive the target vehicle-mounted device to convert from the first state to the second state, and the second duty cycle parameter includes a second duty cycle and/or a second duty cycle change rate, the second duty cycle being greater than the first duty cycle, and the second duty cycle change rate being greater than the first duty cycle change rate.

Further, the determining, according to the first state information, whether the entry condition for the ice-breaking mode is met includes:
determining whether the self-test result of the target vehicle-mounted device is no fault after self-test;
when the self-test result is no obstacle after self-test, turning to the step of controlling the target vehicle-mounted device to convert from the first state to the second state in the first preset driving mode;
when the self-test result is an obstacle after self-test, outputting second fault prompt information.

Further, the first state information also includes a first ambient temperature and a first ambient humidity corresponding to a current position of an own vehicle, a second ambient temperature and second ambient humidity collected by a sensing device of the own vehicle; after the determining whether the self-test result of the target vehicle-mounted device is no fault after self-test, the method includes:
when the self-test result is no obstacle after self-test, calculating a temperature difference between the first ambient temperature and the second ambient temperature and a humidity difference between the first ambient humidity and the second ambient humidity;
determining whether the temperature difference and the humidity difference meet a first preset condition; where the first preset condition includes that the temperature difference is within a first preset range and the humidity difference is within a second preset range;
when the first preset condition is met, determining whether the second ambient temperature and the second ambient humidity meet the second preset condition; where the second preset condition includes that the second ambient temperature is lower than a preset temperature threshold and the second ambient humidity is higher than a preset humidity threshold;
when the second preset condition is met, turning to the step of controlling the target vehicle-mounted device to convert from the first state to the second state in the first preset driving mode.

Further, before the determining, according to the first state information, whether the entry condition of the ice-breaking mode is met, the method includes:
obtaining a time interval between a time instant when the preset instruction is received and a time instant when the target vehicle-mounted device last arrived at the second location;
determining whether the time interval is greater than a second preset time period;
if so, determining, according to the first state information, whether the entry condition of the ice-breaking mode is met or turning to the step of obtaining the first state information for determining whether to enter the ice-breaking mode;
if not, ending the process.

A second aspect of the present invention proposes a vehicle-mounted device control apparatus, including:
a state obtaining module, configured to obtain first state information for determining whether to enter an ice-breaking mode in response to a preset instruction; where the first state information includes a self-test result of a target vehicle-mounted device, and the target vehicle-mounted device has a first state of being concealed in a vehicle body at a first position and a second state of being exposed outside the vehicle body at a second position;
a first determining module, configured to determine, according to the first state information, whether an entry condition of the ice-breaking mode is met; if it is met, turn to a first ice-breaking module;
the first ice-breaking module, configured to control the target vehicle-mounted device to convert from the first state to the second state in a first preset driving mode;
a first position determining module, configured to detect whether the target vehicle-mounted device reaches the second position within a first preset time period; if it does not reach the second position, turn to an information output module;
the information output module, configured to output fault prompt information.

A third aspect of the present invention proposes an electronic device. The electronic device includes a processor and a memory. At least one instruction or at least one program is stored in the memory. The at least one instruction or the at least one program is loaded and executed by the processor to implement the vehicle-mounted device control method proposed in the first aspect of the present invention.

A fourth aspect of the present invention proposes a computer-readable storage medium, in which at least one instruction or at least one program is stored, and the at least one instruction or the at least one program is loaded and executed by a processor to implement the vehicle-mounted device control method proposed in the first aspect of the present invention.

Implementing the embodiments of the present invention has the beneficial effects set forth in the following.

Embodiments of the present invention provide a vehicle-mounted device control method and apparatus, a device and a storage medium, which are used to control a vehicle-mounted device having a concealing mechanism, specifically including: identifying whether a current state meets a condition for deploying the concealed vehicle-mounted device when a driving mechanism is stuck, and effectively breaking ice in real time when the condition for deploying is met, so as to ensure that the concealed vehicle-mounted device can be deployed normally, ensure that advanced driving assistance functions are normally activated and actuated, and also avoid a risk of potential damage to the driving mechanism. Even if the ice cannot be broken successfully, a driver can also be warned in advance, so as to prevent the driver from discovering function failures while a vehicle is driving, and improve the stability and robustness of the entire driving assistance system based on the concealed vehicle-mounted device during use.

Additional aspects and advantages of the present invention will be set forth in part in the following description, and in part will be obvious from the description, or may be learned by implementing the present invention.

### BRIEF DESCRIPTION OF DRAWINGS

In order to explain technical solutions in embodiments of the present invention or in the prior art more clearly, the drawings needed to be used in the description of the embodiments or the prior art will be briefly introduced below. Obviously, the drawings in the following description are only are some embodiments of the present invention. For those of ordinary skill in the art, other drawings can be obtained based on these drawings without exerting creative efforts.
FIG. 1 is a schematic diagram of a position of a lidar concealing mechanism on a vehicle in the prior art.
FIG. 2 is a schematic structural diagram of a lidar concealing mechanism in the prior art.
FIG. 3 is a schematic diagram of a position of another lidar concealing mechanism on a vehicle in the prior art.
FIG. 4 is a schematic structural diagram of another lidar concealing mechanism in the prior art.
FIG. 5 is a flow chart of a vehicle-mounted device control method provided by an embodiment of the present invention.
FIG. 6 is a schematic diagram of an interface of second fault prompt information provided by an embodiment of the present invention.
FIG. 7 is a flow chart for determining whether to enter an ice-breaking mode provided by an embodiment of the present invention.
FIG. 8 is a schematic diagram of the principle of a driving circuit of a concealing mechanism provided by an embodiment of the present invention.
FIG. 9 is a schematic diagram of an interface of first fault prompt information provided by an embodiment of the present invention.
FIG. 10 is a flow chart of another vehicle-mounted device control method provided by an embodiment of the present invention.
FIG. 11 is another flow chart for determining whether an entry condition for ice-breaking is met according to an embodiment of the present invention.
FIG. 12 is a structural block diagram of a vehicle-mounted device control apparatus provided by an embodiment of the present invention.

### DESCRIPTION OF EMBODIMENTS

In order to make the purpose, technical solutions and advantages of the embodiments of the present invention clearer, the technical solutions in the embodiments of the present invention will be clearly and completely described below with reference to the drawings in the embodiments of the present invention. Obviously, the described embodiments are some embodiments of the present invention, rather than all embodiments. Based on the embodiments of the present invention, all other embodiments obtained by those of ordinary skill in the art without creative efforts fall within the scope of protection of the present invention. Examples of the embodiments are illustrated in the drawings, where the same or similar reference numerals throughout represent the same or similar elements or elements having the same or similar functions.

It should be noted that the terms "first", "second", etc. in the description and claims of the present application and the above-mentioned drawings are used to distinguish similar objects and are not necessarily used to describe a specific order or sequence. It is to be understood that the data so used are interchangeable under appropriate circumstances so that the embodiments of the present application described herein can be implemented in sequences other than those illustrated or described herein. Furthermore, the terms "including" and "having" and any variations thereof are intended to cover plate non-exclusive inclusions, e.g., a process, method, system, product or server that includes a series of steps or units is not limited to those explicitly listed, instead, it may include other steps or units not expressly listed or steps or units inherent to the process, method, product or device.

### Embodiments

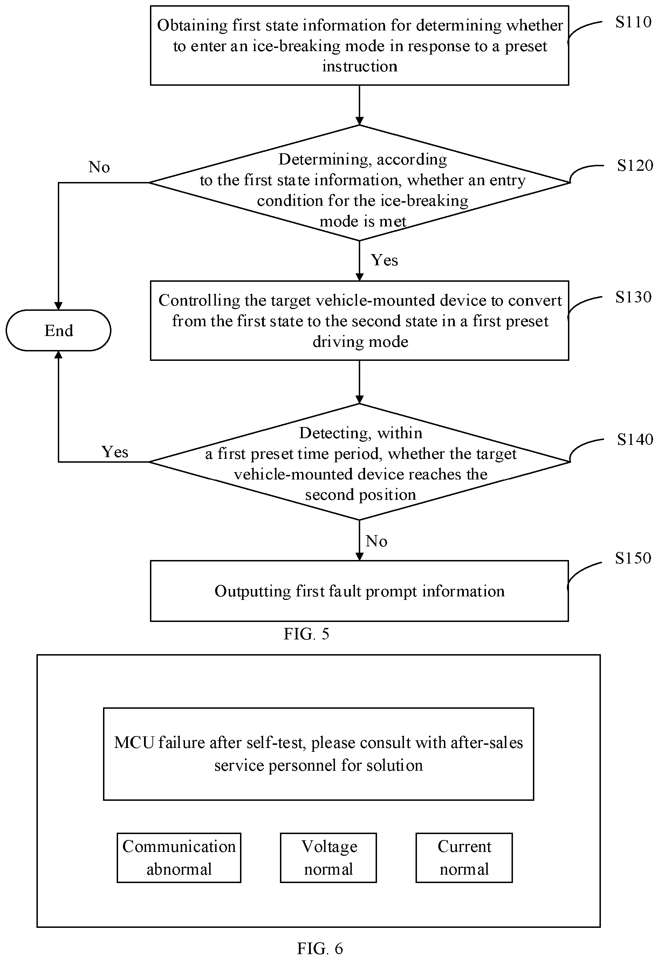

FIG. 5 is a flow chart of a vehicle-mounted device control method provided by an embodiment of the present invention. This specification provides operation steps of the method as described in the embodiment or flow chart, but more or fewer operation steps may be included based on conventional or non-creative efforts. The sequence of the steps listed in the embodiment is only one implementation among various sequences for executing the steps, and does not represent the only execution sequence. When the actual system or server product is executed, the steps can be executed sequentially or in parallel (for example, in a parallel processor or multi-threaded processing environment) according to the methods shown in the embodiments or drawings. Specifically, as shown in FIG. 5, the method may include the following steps.

S110: obtaining first state information for determining whether to enter an ice-breaking mode in response to a preset instruction.

specifically, the preset instruction includes a vehicle body control system wake-up signal or a driving assistance system wake-up signal, where the vehicle body control system wake-up signal or the driving assistance system wake-up signal can be a vehicle unlocking signal, a vehicle ignition signal, a driving assistance function activation signal, etc., which is not limited in the present embodiment.

When the preset instruction is the vehicle unlocking signal, a central control module of the vehicle body control system can be awakened in response to the vehicle unlocking signal and send a wake-up signal to the driving assistance system domain controller. The central control module controls a microcontroller unit (Microcontroller Unit, MCU) of a concealing mechanism of a target vehicle-mounted device according to the received wake-up signal so as to perform a self-test. The MCU specifically performs the self-test by controlling the motor to execute the deploying process of the cover plate and the concealing mechanism. The self-test result includes but is not limited to whether a communication, current, and voltage etc. is normal.

It should be noted that a domain controller is a controller that integrates all functions in the same domain. For example, a cockpit domain controller is a controller that integrates all functions in a cab.

Specifically, the first state information includes the self-test result of the target vehicle-mounted device, and the target vehicle-mounted device has a first state of being concealed in a vehicle body at a first position and a second state of being exposed outside the vehicle body at a second position.

In some embodiments, after the MCU performs the self-test and there is no fault, it executes a shutdown process, so that the target vehicle-mounted device returns to the first state of being concealed in the vehicle body at the first position.

In some embodiments, after the MCU performs the self-test and there is no fault, the target vehicle-mounted device is kept in the second state of being exposed outside the vehicle body at the second position.

Lidar is a sensor used in driving assistance system. Lidar has more advantages in detection accuracy, range and stability, and can reach a centimeter level accuracy. An exemplary embodiment of the present invention will be described in the following, taking the target vehicle-mounted device being a lidar as an example. It should be noted that the target vehicle-mounted device here may be a lidar, or may be a movable mechanism externally decorated on a vehicle, which includes but is not limited to a wiper, a variable rear wing, an active aero shutter, an electric foldable rearview mirror, etc.

It should be noted that the target vehicle-mounted device also has a driving mechanism for driving the target vehicle-mounted device to switch between the first state and the second state. The embodiment of the present invention is applicable to the situation where the driving mechanism is stuck in an initial position due to any reasons, including but not limited to situations such as the cover plate freezing, the moving mechanism freezing, and blockage of fallen leaves, sediment and other foreign objects, which cause the moving mechanism to be stuck in the initial position.

S120: determining, according to the first state information, whether an entry condition for the ice-breaking mode is met; when the entry condition for the ice-breaking mode is met, turning to step S130.

In order to exclude the situation that a failure occurs in the target vehicle-mounted device, in some embodiments, the determining whether the entry condition for the ice-breaking mode is met based on the first state information includes:
determining whether the self-test result of the target vehicle-mounted device is no fault after self-test; where the target vehicle-mounted device includes a concealing system of the target vehicle-mounted device, and the concealing system includes a driving mechanism for driving the target vehicle-mounted device to switch between the first state and the second state.

When the self-test result is no obstacle after self-test, the next step is executed; that is, when the self-test result is no obstacle after self-test, the step S130 will be executed;
when the self-test result is an obstacle after self-test, second fault prompt message is output.

In this way, even if the ice cannot be broken successfully, a driver can still be warned in advance, so as to prevent the driver from discovering function failures of the target vehicle-mounted device or the failure of a driving assistance function based on the target vehicle-mounted device during the driving of the vehicle.

The expression form of the second fault prompt information includes but is not limited to any one or a combination of voice, text, picture, animation, light, etc.; for example, the outputting the second fault prompt information may be to issue a fault reminder through a vehicle speaker/horn, for example, a first fault information prompt interface can be displayed on a central control screen. FIG. 6 is a schematic diagram of an interface of second fault prompt information provided by an embodiment of the present invention. As shown in FIG. 6, the first fault information prompt interface is provided with a message prompt box and a self-test information list. The message prompt box displays "A fault after self-test, please consult with after-sales service personnel for solution", the self-test information list includes the communication, current, and voltage detection results of a MCU chip.

In some embodiments, according to the situation that the driving mechanism is stuck in the initial position since the cover plate freezes or the moving mechanism freezes, it is necessary to determine whether the entry condition for the ice-breaking mode is met, based on a combination of ambient temperature information and ambient humidity information. Accordingly, the first state information also includes a first ambient temperature and a first ambient humidity corresponding to a current location of an own vehicle, and a second ambient temperature and a second ambient humidity collected by a sensing device of the own vehicle.

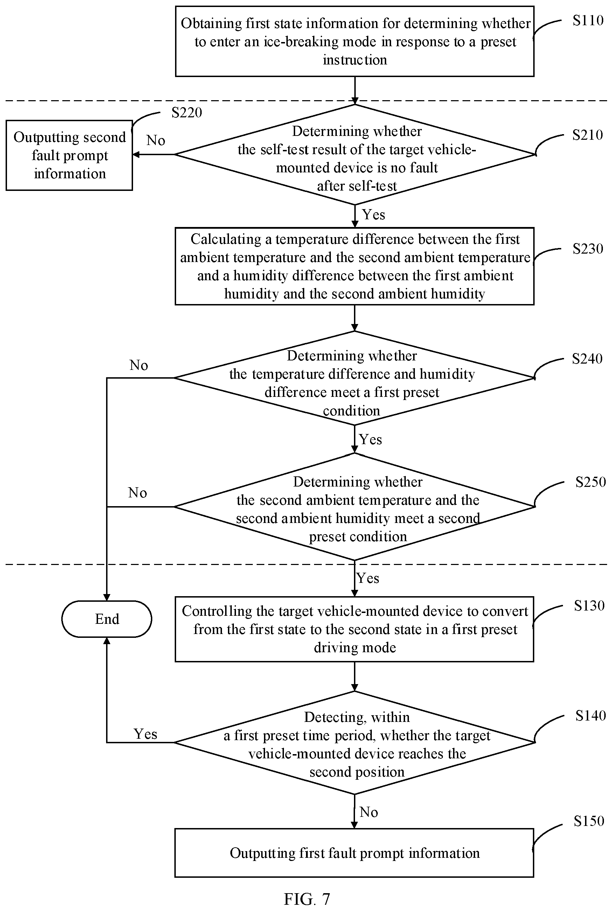

FIG. 7 is a flow chart for determining whether to enter an ice-breaking mode provided by an embodiment of the present invention. Referring to FIG. 7, in some embodiments, the determining, according to the first state information, whether the entry condition for the ice-breaking mode is met includes the following steps.

S210: determining whether the self-test result of the target vehicle-mounted device is no fault after self-test; when the self-test result is no obstacle after self-test, turning to step S230; when the self-test result is an obstacle after self-test, turning to step S220.

S220: outputting second fault prompt information.

S230: calculating a temperature difference between the first ambient temperature and the second ambient temperature and a humidity difference between the first ambient humidity and the second ambient humidity.

The first ambient temperature refers to a real-time atmospheric temperature obtained through the Internet, the second ambient temperature refers to an outside temperature sensed by a vehicle temperature sensor in real time; the first ambient humidity refers to a real-time atmospheric humidity obtained through the Internet, and the second ambient humidity refers to an outside humidity sensed by a vehicle humidity sensor in real time.

S240: determining whether the temperature difference and humidity difference meet a first preset condition; when the first preset condition is met, turning to step S250.

Steps S230 and S240 are executed to eliminate a situation of that the vehicle-mounted temperature and humidity sensing devices are abnormal. When the temperature difference and humidity difference meet the first preset condition, the vehicle-mounted temperature and humidity devices are normal, it can be turned to the next step; when the temperature difference and humidity difference does not meet the first preset condition, the vehicle-mounted temperature and humidity sensing devices are abnormal, and a prompt message indicating that the vehicle-mounted temperature and humidity sensing devices are abnormal is output.

The first preset condition includes that the temperature difference is within a first preset range and the humidity difference is within a second preset range; the first preset range is within ±3 degrees, and the second preset range is within ±5%. For example, when the temperature difference is 2 degrees and the humidity difference is 3%, the temperature difference and the humidity difference meet the first preset condition. When the temperature difference is -4 degrees and the humidity difference is 3%, the temperature difference and the humidity difference do not meet the first preset condition. That is, when the temperature difference is within the first preset range and the humidity difference is within the second preset range, the temperature difference and the humidity difference meet the first preset condition. If any one of them is not within the preset range, the temperature difference and humidity difference do not meet the first preset condition.

S250: determining whether the second ambient temperature and the second ambient humidity meet a second preset condition; when the second preset condition is met, executing the next step; that is, when the second preset condition is met, turning to step S130; when the second preset condition is not met, ending the process.

The second preset condition includes that the second ambient temperature is lower than a preset temperature threshold and the second ambient humidity is higher than a preset humidity threshold; the preset temperature threshold is less than or equal to -10 degrees, and the preset humidity threshold is greater than or equal to 60%. For example, the second preset condition is that the second ambient temperature is lower than -10 degrees and the second ambient humidity is higher than 60%. For example, the second preset condition is that the second ambient temperature is lower than -12 degrees and the second ambient humidity is higher than 65%.

S130: controlling the target vehicle-mounted device to convert from the first state to the second state in a first preset driving mode.

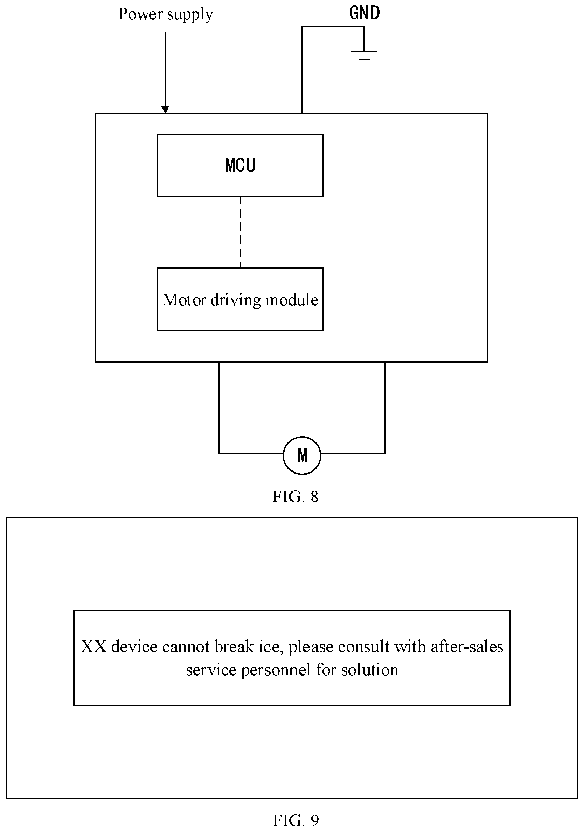

The target vehicle-mounted device is controlled to convert from the first state to the second state in the first preset driving mode, so as to try to drive a moving mechanism with a smaller driving force and frequency to break the ice, specifically including:
controlling an action of a motor of the target vehicle-mounted device with a first duty cycle parameter; where the motor is used to drive the target vehicle-mounted device to convert from the first state to the second state, and the first duty cycle parameter includes a first duty cycle and/or a first duty cycle change rate. For example, FIG. 8 is a schematic diagram of the principle of a driving circuit of a concealing mechanism provided by an embodiment of the present invention. Referring to FIG. 8, the illustrated M is used to represent the motor (Motor, M). The MCU of the concealing mechanism drives the cover plate motor with a rated 100% duty cycle signal and a duty cycle change rate of 200%/s, and reads the position of the cover plate in real time. If the cover plate can reach a maximum opening position, the ice is broken successfully. A normal opening time of the cover plate is 500ms, if the cover plate cannot reach the opening position after 800ms, then the ice-breaking mode will be entered.

S140: detecting, within a first preset time period, whether the target vehicle-mounted device reaches the second position; if it does not reach the second position, turning to step S150.

The first preset time period is determined based on a duration required for a normal deployment of the target vehicle-mounted device. For example, the normal deployment duration of lidar is 500ms. In this way, when the motor of the target vehicle-mounted device driven by a small driving force and frequency fails to break the ice, the motor of the target vehicle-mounted device can be avoided from running for a long period of time.

S150: outputting first fault prompt information.

The expression form of the first fault prompt information includes but is not limited to any one or a combination of voice, text, picture, animation, light, etc.

The first fault information prompt interface can be displayed on a central control screen. FIG. 9 is a schematic diagram of an interface of first fault prompt information provided by an embodiment of the present invention. As shown in FIG. 9, the first fault information prompt interface is provided with a message prompt box. The message prompt box displays "XX device cannot break ice, please consult with after-sales service personnel for solution". In this way, even if the ice cannot be broken successfully, a driver can still be warned in advance, so as to prevent the driver from discovering function failures of the target vehicle-mounted device or the failure of a driving assistance function based on the target vehicle-mounted device during the driving of the vehicle.

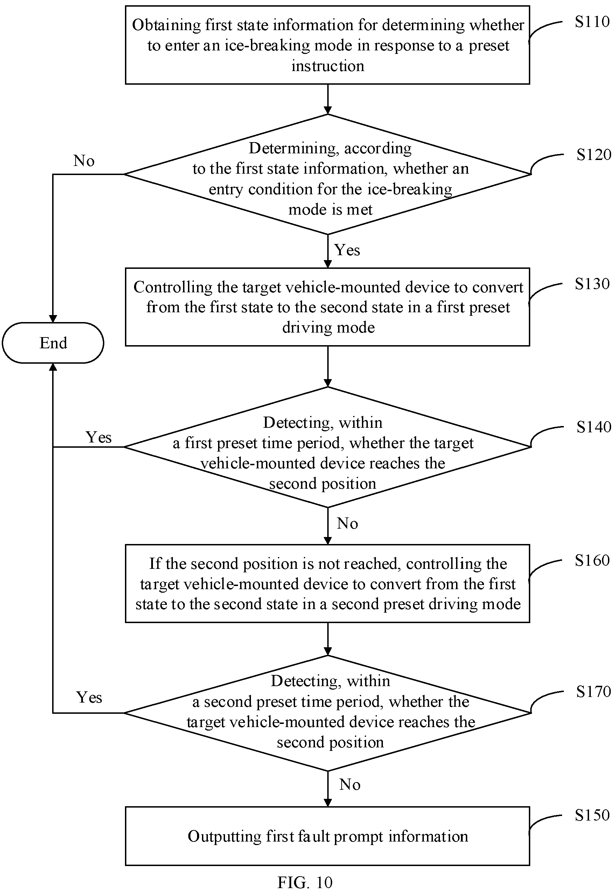

FIG. 10 is a flow chart of another vehicle-mounted device control method provided by an embodiment of the present invention. Referring to FIG. 10, in some embodiments, after detecting whether the target vehicle-mounted device reaches the second position within the first preset time period, the method further includes:

S160: if the second position is not reached, controlling the target vehicle-mounted device to convert from the first state to the second state in a second preset driving mode.

In the embodiment of the present invention, a protection motor is set to have two gears, corresponding to the first preset driving mode and the second preset driving mode respectively. The second preset driving mode has a greater driving force and/or driving frequency as compared to the first preset driving mode. In this way, when an attempt to drive the moving mechanism to break the ice with a smaller driving force and frequency fails, another attempt to drive the moving mechanism to break the ice with a larger driving force and frequency can be conducted.

Specifically, the controlling the target vehicle-mounted device to convert from the first state to the second state in the second preset driving mode includes:
controlling an action of a motor of the target vehicle-mounted device with a second duty cycle parameter; where the motor is used to drive the target vehicle-mounted device to convert from the first state to the second state, and the second duty cycle parameter includes a second duty cycle and/or a second duty cycle change rate, the second duty cycle being greater than the first duty cycle, and the second duty cycle change rate being greater than the first duty cycle change rate. For example, the MCU of the concealing mechanism drives the cover plate motor with a rated 100% duty cycle signal and a duty cycle change rate of 200%/s, and reads the position of the cover plate in real time. If the cover plate can reach a maximum opening position, the ice is broken successfully. A normal opening time of the cover plate is 500ms, if the cover plate cannot reach the opening position after 1200ms, then the ice-breaking mode will be entered.

Specifically, the second preset time is determined based on the second duty cycle change rate and the normal opening time of the cover plate. The second preset time is set to avoid a long-term overloaded running of the current of the cover plate motor or the deploying motor which causes the motor to be overloaded and damaged and thus causes the corresponding function to fail.

S170: detecting, within a second preset time period, whether the target vehicle-mounted device reaches the second position.

When the target vehicle-mounted device does not reach the second position within the second preset time period, the ice breaking fails, and the first fault prompt information is output. The first fault prompt information has been described above and will not be repeated here; when the target vehicle-mounted device reaches the second position within the second preset time period, the ice is broken successfully and the current process ends.

In some embodiments, in a scenario where the preset instruction is a vehicle unlocking signal and the vehicle supports automatic unlocking, when a driver approaches the vehicle, the vehicle will automatically unlock. As a result, the driver walking back and forth near the vehicle will frequently trigger ice breaking, leading to a bad experience. Since it takes time for water vapor to condense to ice, a determining logic can be added to determine whether to enter the ice-breaking mode based on the interval time to prevent the ice-breaking process from being frequently triggered due to the driver from walking back and forth.

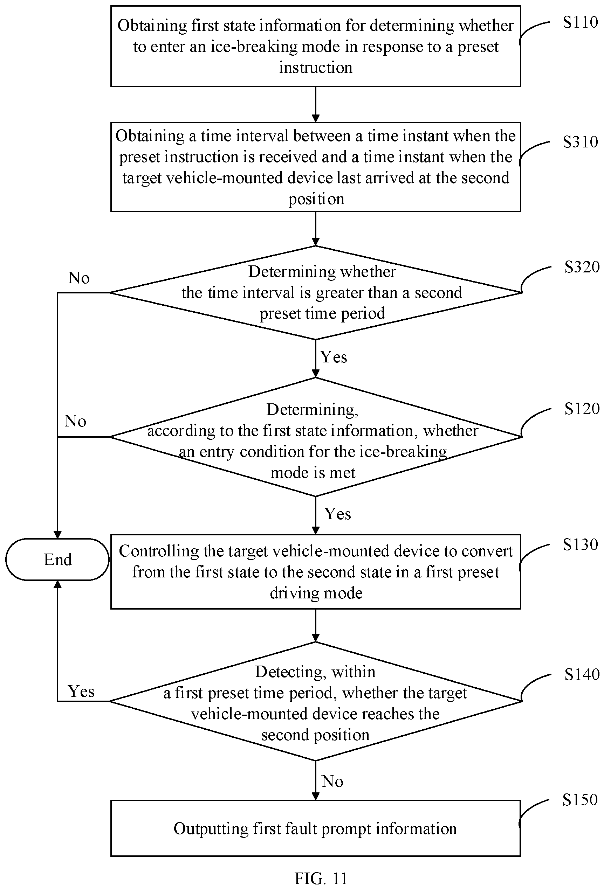

FIG. 11 is another flow chart for determining whether an entry condition for ice-breaking is met according to an embodiment of the present invention. Referring to FIG. 11, in some embodiments, before the determining whether the entry condition for ice-breaking mode is met according to the first state information, the following steps are included.

S310: obtaining a time interval between a time instant when the preset instruction is received and a time instant when the target vehicle-mounted device last arrived at the second position.

S320: determining whether the time interval is greater than the second preset time period; if so, performing the next step S120; if not, ending the process.

Specifically, the second preset time period can be set according to actual needs. For example, a value range of the second preset time period can be greater than 3 hours and less than 6 hours. Specifically, the value of the second preset time period can be 3 hours, 6 hours, or 5 hours, etc., the embodiment of the present invention is not limited thereto.

Specifically, the next step may be a step of determining whether the entry condition for the ice-breaking mode is met based on the first state information, or may be a step of obtaining first state information for determining whether to enter the ice-breaking mode.

It should be noted that the present invention is not limited by the sequence of actions described, because according to the present invention, certain steps can be performed in other orders or simultaneously.

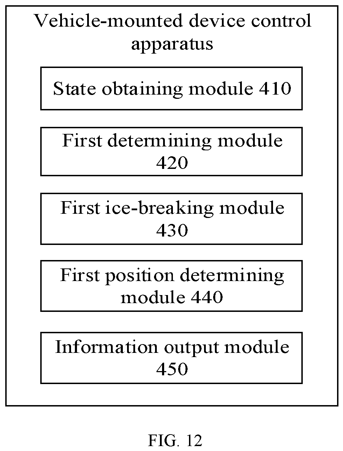

FIG. 12 is a structural block diagram of a vehicle-mounted device control apparatus provided by an embodiment of the present invention. Referring to FIG. 12, a vehicle-mounted device control apparatus provided by an embodiment of the present invention may include the following modules:
a state obtaining module 410, configured to obtain first state information for determining whether to enter an ice-breaking mode in response to a preset instruction; where the first state information includes a self-test result of a target vehicle-mounted device, and the target vehicle-mounted device has a first state of being concealed in a vehicle body at a first position and a second state of being exposed outside the vehicle body at a second position;
a first determining module 420, configured to determine according to the first state information, whether an entry condition of the ice-breaking mode is met; if it is met, turn to a first ice-breaking module;
the first ice-breaking module 430, configured to control the target vehicle-mounted device to convert from the first state to the second state in a first preset driving mode;
a first position determining module 440, configured to detect whether the target vehicle-mounted device reaches the second position within a first preset time period; if it does not reach the second position, turn to an information output module;
the information output module 450, configured to output fault prompt information.

In the above embodiments, each embodiment is described with its own emphasis. For parts that are not described in detail in a certain embodiment, please refer to the relevant descriptions of other embodiments.

Embodiments of the present invention also provide a vehicle, including a vehicle-mounted device control apparatus described in the above apparatus embodiment.

It should be noted that, without departing from the scope of the present disclosure, the vehicle of the present invention may be a truck, a sport utility vehicle, a van, a room vehicle or any other types of vehicles.

Embodiments of the present invention also provide an electronic device. The electronic device includes a processor and a memory. At least one instruction or at least one program is stored in the memory. The at least one instruction or the at least one program is loaded and executed by the processor to implement the vehicle-mounted device control method proposed in the first aspect of the present invention.

Embodiments of the present invention also provide a computer-readable storage medium in which at least one instruction or at least one program is stored, and the at least one instruction or at least one program is loaded and executed by a processor to implement the vehicle-mounted device control method proposed in the first aspect of the present invention.

Optionally, in the present embodiment, the above storage medium may be at least one network server among multiple network servers located in a computer network. Optionally, in present embodiment, the above-mentioned storage medium may include but is not limited to various medias that can store program code, such as U disk, read-only memory (ROM, Read-Only Memory), random access memory (RAM, Random Access Memory), mobile hard disk, magnetic disc or optical disk.

It can be seen from the above-mentioned embodiments of the vehicle-mounted device control method and apparatus, the electronic device or the storage medium provided by the present invention that the embodiments of the present invention are used to control the vehicle-mounted device with a concealing mechanism, specifically including: identifying whether a current state meets a condition for deploying the concealed vehicle-mounted device when a driving mechanism is stuck, and effectively breaking ice in real time when the condition for deploying is met, so as to ensure that the concealed vehicle-mounted device can be deployed normally, ensure that advanced driving assistance functions are normally activated and actuated, and also avoid a risk of potential damage to the driving mechanism. Even if the ice cannot be broken successfully, a driver can also be warned in advance, so as to prevent the driver from discovering function failures while a vehicle is driving, and improve the stability and robustness of the entire driving assistance system based on the concealed vehicle-mounted device during use.

It should be noted that the above-mentioned order of the embodiments of the present invention is only for description and does not used to distinguish the superior and inferior embodiments. Specific embodiments of this specification have been described above. Other embodiments are within the scope of the appended claims. In some cases, the actions or steps recited in the claims can be performed in an order different from that in the embodiments and the desired results can still be achieved. Additionally, the processes depicted in the drawings do not necessarily need to be carried out in the illustrated specific order or sequential order to achieve desirable results. Multi-task processing and parallel processing are also possible or may be advantageous in certain implementations.

Each embodiment in this specification is described in a progressive manner. The same and similar parts between the various embodiments can be referred to each other. What have been emphasized in each embodiment is the distinction from other embodiments. In particular, for the apparatus embodiment, since it is basically similar to the method embodiment, the description thereof is relatively simple. For relevant details, please refer to the description of the method embodiment section.

Those of ordinary skill in the art can understand that all or part of the steps to implement the above embodiments can be completed by hardware, or can be completed by instructing relevant hardware through a program. The program can be stored in a computer-readable storage medium. The above-mentioned storage medium mentioned can be read-only memory, magnetic disk or optical disk, etc.

The above are only preferred embodiments of the present invention and are not intended to limit the present invention. Any modifications, equivalent substitutions, improvements, etc. made within the spirit and principles of the present invention shall be included in the protection scope of the present invention.

## Claims

1. A vehicle-mounted device control method, comprising:
obtaining first state information for determining whether to enter an ice-breaking mode in response to a preset instruction; wherein the first state information comprises a self-test result of a target vehicle-mounted device, and the target vehicle-mounted device has a first state of being concealed in a vehicle body at a first position and a second state of being exposed outside the vehicle body at a second position;
determining, according to the first state information, whether an entry condition for the ice-breaking mode is met;
when the entry condition for the ice-breaking mode is met, controlling the target vehicle-mounted device to convert from the first state to the second state in a first preset driving mode;
detecting, within a first preset time period, whether the target vehicle-mounted device reaches the second position; and
if the second position is not reached, outputting first fault prompt information.

2. The method according to claim 1, wherein after the detecting, within the first preset time period, whether the target vehicle-mounted device reaches the second position, the method further comprises:
if the second position is not reached, controlling the target vehicle-mounted device to convert from the first state to the second state in a second preset driving mode; wherein the second preset driving mode has greater driving force and/or driving frequency as compared to the first preset driving mode; and
detecting, within a second preset time period, whether the target vehicle-mounted device reaches the second position.

3. The method according to claim 2, wherein the controlling the target vehicle-mounted device to convert from the first state to the second state in the first preset driving mode comprises:
controlling an action of a motor of the target vehicle-mounted device with a first duty cycle parameter; wherein the motor is used to drive the target vehicle-mounted device to convert from the first state to the second state, and the first duty cycle parameter comprises a first duty cycle and/or a first duty cycle change rate.

4. The method according to claim 3, wherein the controlling the target vehicle-mounted device to convert from the first state to the second state in the second preset driving mode comprises:
controlling an action of a motor of the target vehicle-mounted device with a second duty cycle parameter; wherein the motor is used to drive the target vehicle-mounted device to convert from the first state to the second state, and the second duty cycle parameter comprises a second duty cycle and/or a second duty cycle change rate, the second duty cycle being greater than the first duty cycle and the second duty cycle change rate being greater than the first duty cycle change rate.

5. The method according to claim 1, wherein the determining, according to the first state information, whether the entry condition of the ice-breaking mode is met comprises:
determining whether the self-test result of the target vehicle-mounted device is no fault after self-test;
when the self-test result is no obstacle after self-test, turning to the step of controlling the target vehicle-mounted device to convert from the first state to the second state in the first preset driving mode;
when the self-test result is an obstacle after self-test, outputting second fault prompt information.

6. The method according to claim 5, wherein the first state information further comprises a first ambient temperature and a first ambient humidity corresponding to a current location of an own vehicle, a second ambient temperature and a second ambient humidity collected by a sensing device of the own vehicle; after the determining whether the self-test result of the target vehicle-mounted device is no fault after self-test, the method comprises:
when the self-test result is no obstacle after self-test, calculating a temperature difference between the first ambient temperature and the second ambient temperature and a humidity difference between the first ambient humidity and the second ambient humidity;
determining whether the temperature difference and the humidity difference meet a first preset condition; wherein the first preset condition comprises that the temperature difference is within a first preset range and the humidity difference is within a second preset range;
when the first preset condition is met, determining whether the second ambient temperature and the second ambient humidity meet a second preset condition; wherein the second preset condition comprises that the second ambient temperature is lower than a preset temperature threshold and the second ambient humidity is higher than a preset humidity threshold;
when the second preset condition is met, turning to the step of controlling the target vehicle-mounted device to convert from the first state to the second state in the first preset driving mode.

7. The method according to claim 1, before the determining, according to the first state information, whether the entry condition of the ice-breaking mode is met, the method comprises:
obtaining a time interval between a time instant when the preset instruction is received and a time instant when the target vehicle-mounted device last arrived at the second location;
determining whether the time interval is greater than a second preset time period;
if so, turning to the step of determining, according to the first state information, whether the entry condition of the ice-breaking mode is met or turning to the step of obtaining the first state information for determining whether to enter the ice-breaking mode;
if not, ending the process.

8. A vehicle-mounted device control apparatus, comprising:
a state obtaining module, configured to obtain first state information for determining whether to enter an ice-breaking mode in response to a preset instruction; wherein the first state information comprises a self-test result of a target vehicle-mounted device, and the target vehicle-mounted device has a first state of being concealed in a vehicle body at a first position and a second state of being exposed outside the vehicle body at a second position;
a first determining module, configured to determine, according to the first state information, whether an entry condition of the ice-breaking mode is met; if the ice-breaking mode is met, turn to a first ice-breaking module;
the first ice-breaking module, configured to control the target vehicle-mounted device to convert from the first state to the second state in a first preset driving mode;
a first position determining module, configured to detect whether the target vehicle-mounted device reaches the second position within a first preset time period; if the target vehicle-mounted device does not reach the second position, turn to an information output module;
the information output module, configured to output fault prompt information.

9. An electronic device, wherein the electronic device comprises a processor and a memory, at least one instruction or at least one program is stored in the memory, and the at least one instruction or the at least one program is loaded and executed by the processor to implement the vehicle-mounted device control method according to any one of claims 1 to 7.

10. A computer-readable storage medium, wherein at least one instruction or at least one program is stored in the storage medium, and the at least one instruction or the at least one program is loaded and executed by a processor to implement the vehicle-mounted device control method according to any one of claims 1 to 7.
